# EUROPEAN PATENT SPECIFICATION

(11) **EP 3 576 104 B1**
(45) Date of publication and mention of the grant of the patent: **01.09.2021**
(21) Application number: 19175822.6
(22) Date of filing: 22.05.2019
(51) Int. Cl.: H01B 1/02, H01B 5/10, H01B 7/00, H01B 7/18, H01B 11/18, D07B 1/06, D07B 1/14

(54) **INSULATION CABLE**
ISOLIERUNGSKABEL
CÂBLE D'ISOLATION

(30) Priority: 30.05.2018 JP 2018103090
(43) Date of publication of application: 04.12.2019
(73) Proprietor: YAZAKI CORPORATION, Minato-ku, Tokyo 108-8333 (JP)
(72) Inventor: ICHIKAWA, Makoto, Susono-shi, Shizuoka 410-1194 (JP)
(74) Representative: Grünecker Patent- und Rechtsanwälte PartG mbB

(56) References cited:
- US-A1- 2007 079 984
- US-A1- 2010 038 112
- US-A1- 2012 163 758
- US-A1- 2017 162 290
- US-B2- 7 409 816

## Description

### BACKGROUND

### 1. TECHNICAL FIELD

The present invention relates to an insulation cable. Specifically, the present invention relates to an insulation cable used in an automobile and the like.

### 2. BACKGROUND ART

There has been an increasing need for an insulation cable that can withstand large current conduction in order to improve driving performance of an automobile. In the insulation cable as such, a conductor of the insulation cable is sheathed with a sheath layer having high heat resistance to prevent from melting under a high-temperature environment. Meanwhile, there also has been an increasing need for reducing weight of the insulation cable in order to improve fuel economy of the automobile, promoting adoption of an insulation cable using aluminum as a conductor.

US 2012/163758 A1 discloses an insulated composite power cable having a wire core defining a common longitudinal axis, a plurality of composite wires around the wire core, and an insulative sheath surrounding the composite wires. The plurality of composite wires around the wire core is arranged in at least two cylindrical layers defined about the common longitudinal axis when viewed in a radial cross section.

A coaxial cable known from US 2007/079984 A1 comprises a core conductor, an insulator arranged around the outer periphery of the core conductor, and an outer conductor arranged around the outer periphery of the insulator coaxially relative to the core conductor, wherein the Young's modulus of the core conductor is 245 GPa or more and the electrical conductivity is 20% IACS or more.

According to US 2017/162290 A1, an electrical wire comprises a central aluminum wire surrounded by at least one copper wire, wherein the aluminum wire and the copper wire are un-coated to let the copper wire be in direct contact with the central aluminum wire, and 3-23% by volume of the electrical wire is aluminum and the rest is copper. Preferably, multiple copper wires are twisted in two or more layers around the central aluminum wire. US7409816 describes a concentric stranded conductor having a concentric strand comprising a plurality of strands twisted together, in which each of the strands comprises a plurality of single wires twisted together; wherein the concentric stranded conductor has a central core strand and a first concentric strand layer which comprises a plurality of first-layer strands twisted together around the central core strand, and each of the single wires is made of aluminum or an aluminum alloy, each having elongation of 2% or more; and further comprising a second concentric strand layer comprising a plurality of second-layer strands twisted around the concentric stranded conductor, and wherein the central core strand, the first-layer strands, the first concentric strand layer, the second-layer strands, and the second concentric strand layer are all twisted in the same direction.

In JP 2017-504156 A, a cable is described which includes a conductor, a silicone sheath surrounding the conductor, and a separation layer arranged between the conductor and the silicone sheath. It has been described therein that the conductor is formed of aluminum or aluminum alloy.

### SUMMARY

In JP 2017-504156 A, the conductor formed of aluminum or aluminum alloy is sheathed with silicone. However, strength of the conductor tends to reduce when a temperature of the conductor increases. In that case, if a wire forming the conductor experiences strain, there is a risk of the insulation cable being cut.

For example, when using the insulation cable in a circuit connecting a motor and an inverter, the wire experiences strain by vibration or bending accompanied by operation of the motor, causing a risk of the insulation cable being cut.

The present invention is made in consideration of the problems in the above conventional technique. An object of the present invention is to provide an insulation cable that can improve durability against bending.

This object is achieved according to the present invention by an insulation cable having the features of independent claim 1.

According to the present invention, the insulation cable that can improve durability against bending can be provided.

### BRIEF DESCRIPTION OF THE DRAWINGS

FIG. 1 is a cross sectional view illustrating an insulation cable according to an embodiment of the present invention;
FIG. 2 is a perspective view illustrating a composite stranded conductor according to the embodiment of the present invention;
FIG. 3 is a cross sectional view along a line A-A in FIG. 2;
FIG.4 is a perspective view illustrating stranded cables forming a center stranded cable according to the embodiment of the present invention;
FIG. 5 is a cross sectional view along a line B-B in FIG. 4;
FIG.6 is a perspective view illustrating stranded cables forming a first-layer assembled stranded cable according to the embodiment of the present invention;
FIG. 7 is a cross sectional view along a line C-C in FIG. 6;
FIG.8 is a perspective view illustrating stranded cables forming a second-layer assembled stranded cable according to the embodiment of the present invention;
FIG. 9 is a cross sectional view along a line D-D in FIG. 8;
FIG. 10 is a front view describing a method of conducting a bending test using a bend tester;
FIG. 11 is a graph illustrating a relationship between a number of times of bending in the bending test of an insulation cable and a number of times of bending in the bending test of a wire harness; and
FIG. 12 is a graph illustrating a relationship between an ambient temperature and a tensile strength of a wire.

### DETAILED DESCRIPTION

Hereinafter, an insulation cable according to an embodiment of the present invention is described in detail using the drawings. Note that dimensional ratios of the drawings are exaggerated for convenience, and may differ from actual ratios.

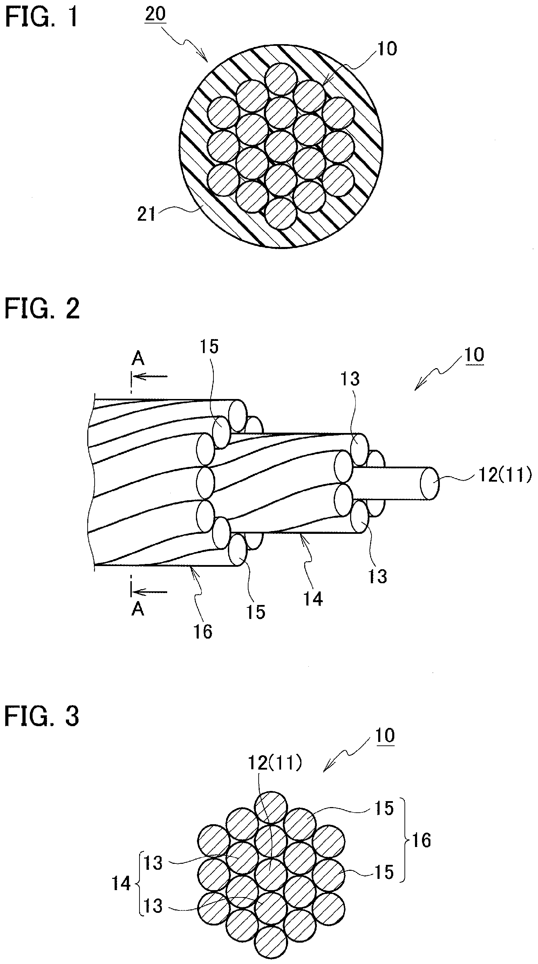

As illustrated in FIG. 1, an insulation cable 20 according to the present embodiment includes a composite stranded conductor 10 and a sheath layer 21 sheathing the composite stranded conductor 10.

As illustrated in FIGS. 2 and 3, the composite stranded conductor 10 includes a center stranded cable 12, a first-layer assembled stranded cable 14, and a second-layer assembled stranded cable 16. The center stranded cable 12 includes at least one stranded cables 11. Further, the first-layer assembled stranded cable 14 is formed by final-twisting plural stranded cables 13 arranged to surround a circumference of the center stranded cable 12. Still further, the second-layer assembled stranded cable 16 is formed by final-twisting plural stranded cables 15 arranged to surround a circumference of the first-layer assembled stranded cable 14.

Specifically, in the present embodiment, the center stranded cable 12 is formed of a single piece of stranded cable 11. Then, 6 pieces of the stranded cables 13 are arranged to surround the circumference of the center stranded cable 12 and are final-twisted in an S-twist direction to form the first-layer assembled stranded cable 14. Thereafter, 12 pieces of the stranded cables 15 are arranged to surround the circumference of the first-layer assembled stranded cable 14 and are final-twisted in the S-twist direction to form the second-layer assembled stranded cable 16. In the present embodiment, the second-layer assembled stranded cable 16 forms the outermost layer of the composite stranded conductor 10. Note that, the S-twist and Z-twist conform to the standard of JIS C3002-1992 (Testing methods of electrical copper and aluminum wires), and are also referred to as right-twist and left-twist, respectively.

The number of the stranded cables 11 forming the center stranded cable 12, the number of the stranded cables 13 forming the first-layer assembled stranded cable 14 and the number of the stranded cables 15 forming the second-layer assembled stranded cable 16 are not limited to the above-mentioned numbers. For example, the number of the stranded cables 11 forming the center stranded cable 12 may be 1 to 80. Also, the number of the stranded cables 13 forming the first-layer assembled stranded cable 14 may be 1 to 80. Moreover, the number of the stranded cables 15 forming the second-layer assembled stranded cable 16 may be 1 to 80.

Additionally, the first-layer assembled stranded cable 14 and the second-layer assembled stranded cable 16 may be final-twisted as long as the final-twist directions are the same to each other, and the final-twist directions of the above stranded cables may respectively be the S-twist or Z-twist direction. Specifically, when the first-layer assembled stranded cable 14 is final-twisted the S-twist direction, the second-layer assembled stranded cable 16 is also final-twisted in the S-twist direction. On the other hand, when the first-layer assembled stranded cable 14 is final-twisted in the Z-twist direction, the second-layer assembled stranded cable 16 is also final-twisted in the Z-twist direction.

As described above, by final-twisting the first-layer assembled stranded cable 14 and the second-layer assembled stranded cable 16 in the same direction, durability against bending can be improved as compared to the case of final-twisting the first-layer assembled stranded cable 14 and the second-layer assembled stranded cable 16 in different directions.

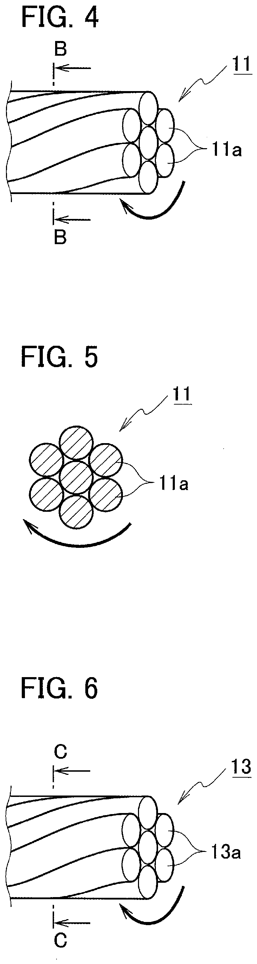

As illustrated in FIGS. 4 to 9, the stranded cable 11 includes plural wires 11a, the stranded cable 13 includes plural wires 13a, and the stranded cable 15 includes plural wires 15a. The stranded cable 11 is formed by first-twisting the plural wires 11a, the stranded cable 13 is formed by first-twisting the plural wires 13a, and the stranded cable 15 is formed by first-twisting the plural wires 15a. In other words, the wire 11a is a single cable forming the stranded cable 11, the wire 13a is a single cable forming the stranded cable 13, and the wire 15a is a single cable forming the stranded cable 15.

The number of the wires 11a forming the stranded cable 11, the number of the wires 13a forming the stranded cable 13, and the number of the wires 15a forming the stranded cable 15 are not particularly limited. For convenience of description, in the present embodiment, regarding the number of the wires 11a forming the stranded cable 11, the number of the wires 13a forming the stranded cable 13, and the number of the wires 15a forming the stranded cable 15, 7 wires are illustrated in each case, however, 14 to 56 wires are generally used. The number of the wires 11a forming the stranded cable 11, the number of the wires 13a forming the stranded cable 13, and the number of the wires 15a forming the stranded cable 15 may be the same or different from each other.

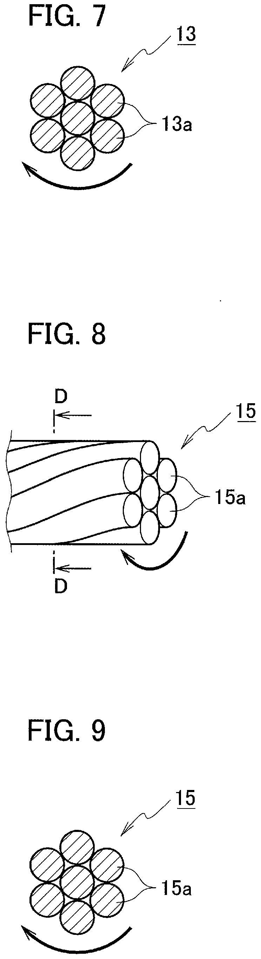

First-twist directions of the stranded cable 11, the stranded cable 13, and the stranded cable 15 are not particularly limited, and may be the S-twist or Z-twist direction. The first-twist directions of the stranded cable 11, the stranded cable 13, and the stranded cable 15 may be the same or different from each other. In the present embodiment, the first-twist directions of the stranded cable 11, the stranded cable 13, and the stranded cable 15 are the same. In other words, the first-twist directions of the stranded cable 11 and the stranded cable 13, and the first-twist directions of the stranded cable 11 and the stranded cable 15 are the same. Also, the first-twist directions of the stranded cable 13 and the stranded cable 15 are the same. More specifically, in the present embodiment, as illustrated in FIGS. 4 and 5, the wires 11a are first-twisted in the S-twist direction to form the stranded cable 11. Also, as illustrated in FIGS. 6 and 7, the wires 13a are first-twisted in the S-twist direction to form the stranded cable 13. Further, as illustrated in FIGS. 8 and 9, the wires 15a are first-twisted in the S-twist direction to form the stranded cable 15.

Additionally, each of the first-twist directions of the stranded cable 11, the stranded cable 13, and the stranded cable 15, may be the same with or different from each of the final-twist directions of the first-layer assembled stranded cable 14 and the second-layer assembled stranded cable 16. In the present embodiment, the first-twist direction of the stranded cable 11 and the final-twist direction of the first-layer assembled stranded cable 14 are the same, and the first-twist direction of the stranded cable 11 and the final-twist direction of the second-layer assembled stranded cable 16 are the same. Further, in the present embodiment, the first-twist direction of the stranded cable 13 and the final-twist direction of the first-layer assembled stranded cable 14 are the same, and the first-twist direction of the stranded cable 15 and the final-twist direction of the second-layer assembled stranded cable 16 are the same.

Shapes and the like of the wires 11a, the wires 13a, and the wires 15a are not particularly limited. For example, in a case where the wires 11a, the wires 13a, and the wires 15a are round wires and are used in an automobile insulation cable, it is preferable that a diameter of each of the wires (i.e., a final cable diameter) is about 0.07 to 1.5 mm, and more preferably, is about 0.14 to 0.5 mm.

Although a cross-sectional area of the composite stranded conductor 10 is not particularly limited, the area is generally 40 to 120 mm². The cross-sectional area of the composite stranded conductor 10 can be changed according to the diameter of each of the wires, the number of the wires forming each stranded cable, and so on.

A tensile strength of the material for forming the wires 11a, the wires 13a, and the wires 15a is 90 MPa or more at an ambient temperature of 200°C or less, and is more preferably 100 MPa or more. By using the above material, a risk of the composite stranded conductor 10 being cut due to vibration or the like can be reduced, even if the composite stranded conductor 10 becomes high in temperature. Note that a value of the tensile strength in the present description can be measured according to JIS C3002-1992.

The wires 11a included in the stranded cables 11 of the center stranded cable 12, the wires 13a included in the stranded cables 13 of the first-layer assembled stranded cable 14, and the wires 15a included in the stranded cables 15 of the second-layer assembled stranded cable 16 have a tensile strength of 90 MPa or more at the ambient temperature of 200°C or less. The aluminum alloy having a tensile strength of 90 MPa or more is an aluminum alloy containing: 0.6% by mass of iron (Fe), 0.01% by mass of zirconium (Zr), 0.1% by mass of silicon (Si), 0.005% by mass of copper (Cu), 0.3% by mass of magnesium (Mg), and the balance aluminum (Al) and inevitable impurities.

In the present embodiment, the inevitable impurities mean substances that are present in raw material and are accidentally mixed into the material in the manufacturing process. The inevitable impurities are the substances that are basically unnecessary, however, a presence of the impurities is permitted because their amount is too small to affect the properties of the wires. The inevitable impurities that are possibly contained in the aluminum alloy used for the wires are elements except aluminum (Al), iron (Fe), zirconium (Zr), silicon (Si), copper (Cu), and magnesium (Mg). The inevitable impurities that are possibly contained in the aluminum alloy include, for example, gallium (Ga), boron (B), vanadium (V), lead (Pb), calcium (Ca), cobalt (Co), manganese (Mn), chromium (Cr), zinc (Zn), and titanium (Ti). An amount of the inevitable impurities in the aluminum alloy are 0.15% by mass or less, and preferably 0.12% by mass or less. Further, a content of each of the elements contained as the inevitable impurities is preferably less than 0.05% by mass, and more preferably less than 0.005% by mass.

The sheath layer 21 is formed of a material classified in ISO 6722 Class F. Specifically, the sheath layer 21 is preferably formed of a material, a rated temperature of which is classified in Class F (-40 to 200°C) in the long-term heating test regulated in ISO 6722-1 5.13. By using the above material, even if a current of a large capacity flows through the composite stranded conductor 10, causing a temperature of the composite stranded conductor 10 to rise, the material has sufficient heat resistance, and therefore, sufficient durability can be provided even when a motor and an inverter are connected for example. Among the materials classified in ISO6722-1 Class F, it is preferable to use a material containing silicone rubber and the like, considering a factor such as flexibility.

A thickness of the sheath layer 21 is not particularly limited as long as electrical insulation property is ensured, and for example, is 0.25 to 2 mm. As a method of sheathing the composite stranded conductor 10 with the sheath layer 21, general known means can be used such as extrusion molding. Specifically, the material for forming the sheath layer 21 is heated together with the composite stranded conductor 10, to thereby form the sheath layer 21. An extruder used in the extrusion molding can be, for example, a single-screw extruder or twin-screw extruder which has a screw, a breaker plate, a cross head, a distributor, a nipple, and a dice.

As described above, the insulation cable 20 according to the present embodiment includes the composite stranded conductor 10, and a sheath layer 21 formed of the material classified in ISO 6722 Class F and sheathing the composite stranded conductor 10. The composite stranded conductor 10 includes the center stranded cable 12 having the at least one stranded cables 11, and the first-layer assembled stranded cable 14 formed by final-twisting the plural stranded cables 13 arranged to surround the circumference of the center stranded cable 12. The composite stranded conductor 10 further includes the second-layer assembled stranded cable 16 formed by final-twisting plural stranded cables 15 arranged to surround the circumference of the first-layer assembled stranded cable 14. The final-twist direction of the first-layer assembled stranded cable 14 is the same as the final-twist direction of the second-layer assembled stranded cable 16. The wires 11a included in the stranded cables 11 of the center stranded cable 12, the wires 13a included in the stranded cables 13 of the first-layer assembled stranded cable 14, and the wires 15a included in the stranded cables 15 of the second-layer assembled stranded cable 16 have a tensile strength of 90 MPa or more at the ambient temperature of 200°C or less. Accordingly, durability against bending can be improved as compared to the case of final-twisting direction of the first-layer assembled stranded cable 14 and the second-layer assembled stranded cable 16 in different directions.

The insulation cable 20 can be used in various applications such as electric and electronic components, mechanical components, vehicle components, building materials, however, use in an automobile cable is particularly preferred.

As described above, the insulation cable 20 according to the present embodiment can be suitably used in an application requiring durability against bending. Further, the insulation cable 20 has high durability against bending, therefore, can be suitably used as a wire harness.

### [EXAMPLES]

Hereinafter, the present invention is described with reference to examples and comparative examples, however, the present invention is not limited to these examples.

### (Example 1)

Firstly, a core cable formed of aluminum alloy having a composition described in TABLE 1 and having a wire diameter of 320 µm was prepared.

**[TABLE 1]**

| Component | Amount (Mass%) |
|---|---|
| Fe | 0.6 |
| Zr | 0.01 |
| Si | 0.1 |
| Cu | 0.005 |
| Mg | 0.3 |
| Al and Inevitable Impurities | Balance |

Next, one bundle of a stranded cable to be used as a center stranded cable was fabricated by first-twisting 24 wires in a bundle in a S-twist direction. Also, 6 bundles of stranded cables to be used as a first-layer assembled stranded cable were fabricated by, for each bundle, first-twisting 24 wires in a bundle in the S-twist direction. Further, 12 bundles of stranded cables to be used as a second-layer assembled stranded cable were fabricated by, for each bundle, first-twisting 24 wires in a bundle in the S-twist direction.

Then, the 6 bundles of first-twisted cables arranged to surround a circumference of the center stranded cable were final-twisted in the S-twist direction to form the first-layer assembled stranded cable. Further, the 12 bundles of first-twisted cables arranged to surround the circumference of the center stranded cable and the first-layer assembled stranded cable were final-twisted in the S-twist direction to form the second-layer assembled stranded cable. As described above, a composite stranded conductor formed of the center stranded cable, the first-layer assembled stranded cable, and the second-layer assembled stranded cable was fabricated.

Next, the composite stranded conductor thus prepared was sheathed with silicone rubber to form a sheath layer having a thickness of 1.4 mm, thereby an insulation cable was fabricated. As the silicone rubber, silicone rubber (KE-1265-U made by Shin-Etsu Chemical Co., Ltd.) classified in ISO 6722-1 Class F was used.

### (Example 2)

The number of first-twisted strands for each stranded cable used in a center stranded cable, a first-layer assembled stranded cable, and a second-layer assembled stranded cable, was changed from 24 pieces to 39 pieces. Accordingly, a cross-sectional area of a composite stranded conductor was changed from 40 mm² (nominal diameter: 40 sq) to 60 mm² (nominal diameter: 60 sq). Apart from the above part, an insulation cable was fabricated in a similar manner to Example 1.

### (Comparative Example 1)

A material for forming each wire was changed from aluminum alloy to pure aluminum of the alloy number 1070 (Al content of 99.70% or more) regulated in JIS H4040 (aluminum and aluminum alloy bar and wire). Apart from the above part, an insulation cable was fabricated in a similar manner to Example 1.

### (Comparative Example 2)

The number of first-twisted strands for each stranded cable used in a center stranded cable, a first-layer assembled stranded cable, and a second-layer assembled stranded cable, was changed from 24 pieces to 39 pieces. Accordingly, a cross-sectional area of a composite stranded conductor was changed from 40 mm² (nominal diameter: 40 sq) to 60 mm² (nominal diameter: 60 sq). Also, a material for forming each wire was changed from aluminum alloy to pure aluminum of the alloy number 1070 regulated in JIS H4040. Apart from the above part, an insulation cable was fabricated in a similar manner to Example 1.

### (Comparative Example 3)

A stranded cable used in a center stranded cable was first-twisted in the S-twist direction, each of stranded cables used in a first-layer assembled stranded cable was first-twisted in a Z-twist direction, and each of stranded cables used in a second-layer assembled stranded cable was first-twisted in the S-twist direction. Further, the first-layer assembled stranded cable was final-twisted in the S-twist direction, and the second-layer assembled stranded cable was final-twisted in the Z-twist direction. Apart from the above part, an insulation cable was fabricated in a similar manner to Example 1.

### (Comparative Example 4)

The number of first-twisted strands for each stranded cable used in a center stranded cable, a first-layer assembled stranded cable, and a second-layer assembled stranded cable, was changed from 24 pieces to 39 pieces. Accordingly, a cross-sectional area of a composite stranded conductor was changed from 40 mm² (nominal diameter: 40 sq) to 60 mm² (nominal diameter: 60 sq). Apart from the above part, an insulation cable was fabricated in a similar manner to Comparative Example 3.

### (Comparative Example 5)

A material for forming each wire was changed from aluminum alloy to pure aluminum of the alloy number 1070 regulated in JIS H4040. Apart from the above part, an insulation cable was fabricated in a similar manner to Comparative Example 3.

### (Comparative Example 6)

The number of first-twisted strands for each stranded cable used in a center stranded cable, a first-layer assembled stranded cable, and a second-layer assembled stranded cable, was changed from 24 pieces to 39 pieces. Accordingly, a cross-sectional area of a composite stranded conductor was changed from 40 mm² (nominal diameter: 40 sq) to 60 mm² (nominal diameter: 60 sq). Also, a material for forming each wire was changed from aluminum alloy to pure aluminum of the alloy number 1070 regulated in JIS H4040. Apart from the above part, an insulation cable was fabricated in a similar manner to Comparative Example 3.

### (Comparative Example 7)

As a material for forming a sheath layer, instead of silicone rubber, 150°C heat-resistant crosslinked polyethylene classified in ISO 6722-1 Class D was used, and apart from this, an insulation cable was fabricated in a similar manner to Example 1.

### (Comparative Example 8)

As a material for forming a sheath layer, instead of silicone rubber, 150°C heat-resistant crosslinked polyethylene classified in ISO 6722-1 Class D was used, and apart from this, an insulation cable was fabricated in a similar manner to Example 2.

### (Comparative Example 9)

As a material for forming a sheath layer, instead of silicone rubber, 150°C heat-resistant crosslinked polyethylene classified in ISO 6722-1 Class D was used, and apart from this, an insulation cable was fabricated in a similar manner to Comparative Example 3.

### (Comparative Example 10)

As a material for forming a sheath layer, instead of silicone rubber, 150°C heat-resistant crosslinked polyethylene classified in ISO 6722-1 Class D was used, and apart from this, an insulation cable was fabricated in a similar manner to Comparative Example 4.

### [EVALUATION]

The following evaluation was made for an insulation cable of each of the examples and comparative examples obtained as described above.

### (Bending Property)

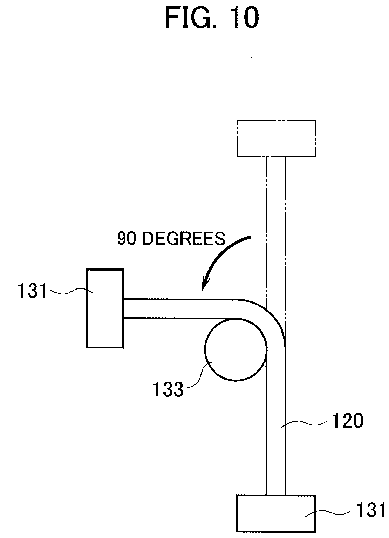

Regarding bending property, a bending test was performed using a cylindrical mandrel bend tester as illustrated in FIG. 10. Firstly, in the room temperature (23°C), an insulation cable 120 of each example and each comparative example was fixed by a fixing tool 131 without attaching any weight on both ends of the insulation cable 120, and was straightened. Next, while setting a mandrel 133 of a radius of 12.5 mm as a fulcrum, the insulation cable 120 was bent at 30 rpm until the insulation cable reached an angle of 90° and then was returned to an original state. Thereafter, it was determined that the wire of the composite stranded conductor had been cut when a resistance value of the composite stranded conductor of the insulation cable 120 increased by a predetermined value (10%) or more, and the number of times of bending (number of reciprocation) for the insulation cable 120 was measured.

It was first evaluated how a difference in the materials forming the sheath layer affected the bending property of the insulation cable. Specifically, each of results of the bending test in Examples 1 and 2 and Comparative Examples 3 and 4 was compared with each of results of Comparative Examples 7 to 10. The evaluation results are shown in TABLE 2.

**[TABLE 2]**

| | Composite Stranded Conductor | | | | | | Sheath Layer | Bending Test |
|---|---|---|---|---|---|---|---|---|
| | Nominal | Center-Side Stranded Cable | First-Layer Assembled Stranded Cable | | Second-Layer Assembled Stranded Cable | | Material | Number of Times of Bending (10,000 Times) |
| | | First- Twist | First- Twist | Final- Twist | First- Twist | Final- Twist | | |
| Example 1 | 40sq | S | S | S | S | S | Silicone | 1.7 |
| Example 2 | 60sq | S | S | S | S | S | Silicone | 1.2 |
| Comparative Example 3 | 40sq | S | Z | S | S | Z | Silicone | 1.1 |
| Comparative Example 4 | 60sq | S | Z | S | S | Z | Silicone | 0.8 |
| Comparative Example 7 | 40sq | S | S | S | S | S | Heat-Resistant Polyethylene | Crack in Insulator |
| Comparative Example 8 | 60sq | S | S | S | S | S | Heat-Resistant Polyethylene | Crack in Insulator |
| Comparative Example 9 | 40sq | S | Z | S | S | Z | Heat-Resistant Polyethylene | Crack in Insulator |
| Comparative Example 10 | 60sq | S | Z | S | S | Z | Heat-Resistant Polyethylene | Crack in Insulator |

As shown in TABLE 2, the insulation cables in Examples 1 and 2 and Comparative Examples 3 and 4, which used silicone as the sheath layer, cracks were not observed in the bending test, and the number of times of bending until the wire of the composite stranded conductor was cut could be measured. On the other hand, the insulation cables in Comparative Examples 7 to 10 experienced cracks in the sheath layer before the wire was cut, therefore, the number of times of bending could not be measured in the bending test. As described above, it has been discovered that the material for forming the sheath layer needs to be the material classified in ISO 6722 Class F such as silicone as above in order to withstand the bending test of the above condition.

Next, Examples 1 and 2 and Comparative Examples 1 and 2 were compared with Comparative Examples 3 to 6, to evaluate how a difference in the first-twist and final-twist directions affected the measurement result of the bending property. Specifically, a ratio of the number of times of bending of Example 1 to the number of times of bending of Comparative Example 3 in the bending test was calculated. Also, in a similar manner, ratios of the number of times of bending of Example 2 and Comparative Examples 1 and 2 to the number of times of bending of Comparative Examples 4 to 6 were respectively calculated.

The evaluation results are shown in TABLE 3.

**[TABLE 3]**

| | Nominal | Material | Center-Side Stranded Cable | First-Layer Assembled Stranded Cable | | Second-Layer Assembled Stranded Cable | | Bending Test | |
|---|---|---|---|---|---|---|---|---|---|
| | | | First- Twist | First- Twist | Final- Twist | First- Twist | Final-Twist | Number of Times of Bending (10,000 Times) | Ratio |
| Example 1 | 40sq | Aluminum Alloy | S | S | S | S | S | 1.7 | 1.5 |
| Example 2 | 60sq | Aluminum Alloy | S | S | S | S | S | 1.2 | 1.5 |
| Comparative Example 1 | 40sq | Pure Aluminum | S | S | S | S | S | 0.9 | 2.3 |
| Comparative Example 2 | 60sq | Pure Aluminum | S | S | S | S | S | 0.5 | 2.5 |
| Comparative Example 3 | 40sq | Aluminum Alloy | S | Z | S | S | Z | 1.1 | - |
| Comparative Example 4 | 60sq | Aluminum Alloy | S | Z | S | S | Z | 0.8 | - |
| Comparative Example 5 | 40sq | Pure Aluminum | S | Z | S | S | Z | 0.4 | - |
| Comparative Example 6 | 60sq | Pure Aluminum | S | Z | S | S | Z | 0.2 | - |

As shown in TABLE 3, the final-twist directions of the first-layer assembled stranded cable and the second-layer assembled stranded cable were the same for the insulation cables of Examples 1 and 2 and Comparative Examples 1 and 2. On the other hand, the final-twist direction of the first-layer assembled stranded cable was different from the final-twist direction of the second-layer assembled stranded cable, in the insulation cables of Comparative Examples 3 to 6. Furthermore, the insulation cables of Example 1 and 2 and Comparative Examples 1 and 2 had the bending property improved by 1.5 to 2.5 times as compared to the insulation cables of Comparative Examples 3 to 6. Accordingly, it can be seen that durability against bending can be improved when the final-twist direction of the first-layer assembled stranded cable is the same as the final-twist direction of the second-layer assembled stranded cable.

Next, a condition of the wire not being cut under a severe environment of the ambient temperature of 200°C was searched as follows.

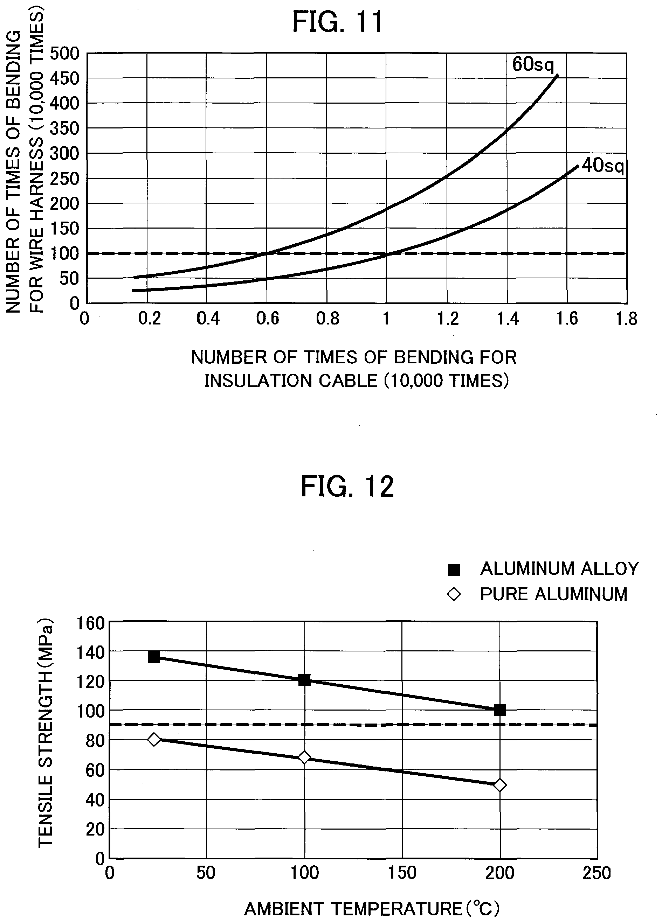

First, the numbers of times of bending of the insulation cable when using mandrels having a diameter of 30 mm, 50mm, and 80 mm, respectively, were measured similarly to the above bending test. Then, based on the numbers of times of bending thus measured and on a strain acting on the wire calculated for each of the above mandrels, an S-N curve was plotted. Thereafter, a wire harness, which had been three-dimensionally modelled using 3-dimensional computer-aided design (3D-CAD), was repeatedly bent with bending radii in a range of 100 to 500 mm, and the numbers of times of bending (number of times at which wire was cut) were measured by simulation based on the above S-N curve. Then, based on the numbers of times of bending thus measured and on a strain acting on the wire calculated for each of the above bending radii, an S-N curve was plotted. Finally, correlation between the above two S-N curves is plotted on a graph as illustrated in FIG. 11. The simulation was performed using a computer aided engineering (CAE) software LS-DYNA of Livermore Software Technology Corporation.

Note that the condition of the bending test for wire harness is the most severe one among requirements that are known under existing conditions. Also, a conductor is used which is not cut, in simulation, even when the wire is bent for million times or more in a form of wire harness at a temperature of the insulation cable being 200°C.

As illustrated in FIG. 11, it can be seen that the insulation cable can achieve the number of times of bending of million times or more in the bending test for wire harness, as long as the composite stranded conductor having a cross-sectional area of 40 mm² achieves the number of times of bending of 10,000 times or more in the bending test. Further, it can be seen that the insulation cable can achieve the number of times of bending of million times or more in the bending test for wire harness, as long as the composite stranded conductor having a cross-sectional area of 60 mm² achieves the number of times of bending of 6,000 times or more in the bending test.

Next, in order to achieve the number of times of bending of million times of more in the bending test for wire harness, a strength required for the wires was evaluated and it was discovered that a tensile strength of the wires needs to be 90 MPa or more. In regard to this matter, in order to evaluate that the tensile strength of the wires is 90 MPa or more even when the ambient temperature being 200°C, tensile strengths of the aluminum alloy and pure aluminum used in Examples and Comparative Examples were measured. A graph describing a relationship between the ambient temperature and the tensile strength of the wires using pure aluminum and of the wires using the aluminum alloy having a composition described in TABLE 1 is described in TABLE 4 and FIG. 12.

**[TABLE 4]**

| | Tensile Strength (MPa) | | |
|---|---|---|---|
| | 25°C | 100°C | 200°C |
| Aluminum Alloy | 130 | 120 | 100 |
| Pure Aluminum | 80 | 70 | 50 |

As described in TABLE 4 and FIG. 12, the tensile strength of the wires using pure aluminum was 80 MPa at 25°C and 50MPa at 200°C. On the other hand, the tensile strength of the wires using aluminum alloy was 130 MPa at 25°C and 100MPa even at 200°C. Accordingly, it can be seen that the aluminum alloy having the composition described in TABLE 1 has a tensile strength of as high as 90 MPa even when the ambient temperature being 200°C.

The above results are summarized in TABLE 5 to describe whether the insulation cable in each of Examples and Comparative Examples can achieve the number of times of bending of million times or more in the bending test of wire harness.

**[TABLE 5]**

| | Nominal | Wire | Bending Test (10,000 Times) | | Evaluation |
|---|---|---|---|---|---|
| | | | Measurement | Target | |
| Example 1 | 40sq | Aluminum Alloy | 1.7 | 1.0 or more | Good |
| Example 2 | 60sq | Aluminum Alloy | 1.2 | 0.6 or more | Good |
| Comparative Example 1 | 40sq | Pure Aluminum | 0.9 | 1.0 or more | No Good |
| Comparative Example 2 | 60sq | Pure Aluminum | 0.5 | 0.6 or more | No Good |

As described in TABLE 5, it can be seen that by using the aluminum alloy for the wires, good bending property was exhibited even when a target value of the bending test was set high. On the other hand, by using pure aluminum as the wires, a target value of the bending test could not be achieved when the target value was set high. Accordingly, when using the composite stranded conductor under a high temperature environment, it is preferable to use the aluminum alloy having the composition described in TABLE 1, rather than to use pure aluminum.

## Claims

1. An insulation cable (20), comprising:
a composite stranded conductor (10), and
a sheath layer (21) formed of a material classified in ISO 6722 Class F and sheathing the composite stranded conductor (10), wherein
the composite stranded conductor (10) comprises a center stranded cable (12) having at least one stranded cables (11), a first-layer assembled stranded cable (14) formed by final-twisting a plurality of stranded cables (13) arranged to surround a circumference of the center stranded cable (12), and a second-layer assembled stranded cable (16) formed by final-twisting a plurality of stranded cables (15) arranged to surround a circumference of the first-layer assembled stranded cable (14),
a final-twist direction of the first-layer assembled stranded cable (14) is the same as a final-twist direction of the second-layer assembled stranded cable (16), and
wires (11a) included in the stranded cables (11) of the center stranded cable (12), wires (13a) included in the stranded cables (13) of the first-layer assembled stranded cable (14), and wires (15a) included in the stranded cables (15) of the second-layer assembled stranded cable (16) have a tensile strength of 90 MPa or more at an ambient temperature of 200°C or less, and are made from an aluminum alloy consisting of:
0.6 mass% iron (Fe),
0.01 mass% zirconium (Zr),
0.1 mass% silicon (Si),
0.005 mass% copper (Cu),
0.3 mass% magnesium (Mg), and
a balance of aluminum (Al) and inevitable impurities, wherein an amount of the inevitable impurities is 0.15 mass% or less.

2. The insulation cable (20) according to claim 1, wherein
the inevitable impurities include one or more of the following elements: gallium (Ga), boron (B), vanadium (V), lead (Pb), calcium (Ca), cobalt (Co), manganese (Mn), chromium (Cr), zinc (Zn), and titanium (Ti).

## Patentansprüche

1. Isolierkabel (20), umfassend:
einen Verbund-Litzenleiter (10), sowie
eine Ummantelungsschicht (21), die aus einem in ISO 6722 Klasse F eingestuften Material besteht und den Verbund-Litzenleiter (10) ummantelt, wobei
der Verbund-Litzenleiter (10) ein Mittel-Litzenkabel (12), das wenigstens ein Litzenkabel (11), ein zusammengesetztes Litzenkabel (14) einer ersten Schicht, das durch abschließendes Verdrillen einer Vielzahl von Litzenkabeln (13) ausgebildet wird, die so angeordnet sind, dass sie einen Umfang des Mittel-Litzenkabels (12) umschließen, sowie ein zusammengesetztes Litzenkabel (16) einer zweiten Schicht umfasst, das durch abschließendes Verdrillen einer Vielzahl von Litzenkabeln (15) ausgebildet wird, die so angeordnet sind, dass sie einen Umfang des zusammengesetzten Litzenkabels (14) der ersten Schicht umschließen,
eine abschließende Verdrill-Richtung des zusammengesetzten Litzenkabels (14) der ersten Schicht die gleiche ist wie eine abschließende Verdrill-Richtung des zusammengesetzten Litzenkabels (16) der zweiten Schicht, sowie
Drähte (11a), die in den Litzenkabeln (11) des Mittel-Litzenkabels (12) enthalten sind, Drähte (13a), die in den Litzenkabeln (13) des zusammengesetzten Litzenkabels (16) der ersten Schicht enthalten sind, und Drähte (15a), die in den Litzenkabeln (15) des zusammengesetzten Litzenkabels (16) der zweiten Schicht enthalten sind, eine Zugfestigkeit von 90 MPa oder mehr bei einer Umgebungstemperatur von 200°C oder darunter aufweisen und aus einer Aluminiumlegierung bestehen, die zusammengesetzt ist aus:
0,6 Masse-% Eisen (Fe),
0,01 Masse-% Zirkonium (Zr),
0,1 Masse-% Silizium (Si),
0,005 Masse-% Kupfer (Cu),
0,3 Masse-% Magnesium (Mg), sowie
einem Rest aus Aluminium (AI) und unvermeidbaren Verunreinigungen, wobei eine Menge der unvermeidbaren Verunreinigungen 0,15 Masse-% oder weniger beträgt.

2. Isolierkabel (20) nach Anspruch 1, wobei
die unvermeidbaren Verunreinigungen eines oder mehrere der folgenden Elemente einschließen:
Gallium (Ga), Bor (B), Vanadium (V), Blei (Pb), Calcium (Ca), Kobalt (Co), Mangan (Mn), Chrom (Cr), Zink (Zn) und Titan (Ti).

## Revendications

1. Câble d'isolation (20), comprenant :
un conducteur divisé composite (10), et
une couche formant gaine (21) formée d'un matériau relevant de la classe F telle que définie dans l'ISO 6722 et enveloppant le conducteur divisé composite (10), dans lequel
le conducteur divisé composite (10) comprend un câble toronné central (12) comprenant au moins un câble toronné (11), un câble toronné assemblé de première couche (14) formé par un torsadage final d'une pluralité de câbles toronnés (13) agencés de manière à entourer une circonférence du câble toronné central (12), et un câble toronné assemblé de seconde couche (16) formé par un torsadage final d'une pluralité de câbles toronnés (15) agencés de manière à entourer une circonférence du câble toronné assemblé de première couche (14),
une direction de torsadage final du câble toronné assemblé de première couche (14) est identique à une direction de torsadage final du câble toronné assemblé de seconde couche (16), et
les fils (11a) inclus dans les câbles toronnés (11) du câble toronné central (12), les fils (13a) inclus dans les câbles toronnés (13) du câble toronné assemblé de première couche (14) et les fils (15a) inclus dans les câbles toronnés (15) du câble toronné assemblé de seconde couche (16) ont une résistance à la traction d'au moins 90 MPa à une température ambiante inférieure ou égale à 200°C, et sont formés d'un alliage d'aluminium composé de :
0,6 % en masse de fer (Fe),
0,01 % en masse de zirconium (Zr),
0,1 % en masse de silicium (Si),
0,005 % en masse de cuivre (Cu),
0,3 % en masse de magnésium (Mg), et
un reste composé d'aluminium (Al) et des inévitables impuretés, dans lequel une quantité des inévitables impuretés représente 0,15 % en masse au maximum.

2. Câble d'isolation (20) selon la revendication 1, dans lequel
les inévitables impuretés comprennent au moins un des éléments suivants :
gallium (Ga), bore (B), vanadium (V), plomb (Pb), calcium (Ca), cobalt (Co), manganèse (Mn), chrome (Cr), zinc (Zn) et titane (Ti).
